# EUROPÄISCHE PATENTSCHRIFT

(11) **EP 1 078 950 B1**
(45) Veröffentlichungstag und Bekanntmachung des Hinweises auf die Patenterteilung: **05.11.2003**
(21) Anmeldenummer: 00117501.7
(22) Anmeldetag: 12.08.2000
(51) Int. Cl.: C08J 9/14, C08L 75/04

(54) **Prepolymerzusammensetzung zur Erzeugung von Isolierschäumen**
Prepolymer composition for preparing an insulating foam
Composition de prépolymère pour préparer une mousse d'isolation

(30) Priorität: 23.08.1999 DE 19939926
(43) Veröffentlichungstag der Anmeldung: 28.02.2001
(73) Patentinhaber: RATHOR AG, 9050 Appenzell (CH)
(72) Erfinder: Dr. Rainer Nützel, 9057- Weissbad (CH); René Schumacher, 9403 - Goldbach (CH)
(74) Vertreter: Thiel, Christian, Dr. Dipl.-Chem.

(56) Entgegenhaltungen:
- EP-A- 0 742 250
- US-A- 5 194 325
- US-A- 5 488 071

## Beschreibung

Die Erfindung betrifft eine Prepolymerzusammensetzung, insbesondere zur Erzeugung von Isolierschäumen, auf Basis eines Polyisocyanats mit einer Funktionalität von wenigstens 2 und eines Polyols mit wenigstens 2 OH-Gruppen im Molekül, wobei das Prepolymer ein Isocyanatgehalt von 6 bis 18 Gew.-% aufweist und die Zusammensetzung übliche Zusatzstoffe sowie eine unter Druck flüssige Treibgaskomponente enthält.

Die erfindungsgemäße Prepolymerzusammensetzung dient zur Erzeugung von Polyurethan-Dämmschäumen, die vor allem zum Ausschäumen von Hohlräumen eingesetzt werden. Hauptsächliches Anwendungsgebiet ist das Bauwesen. Sie wird auch aber auch zum Ausschäumen von technischen Produkten, bei denen Hohlräume zur Vermeidung von Schwitzwasserestem verfüllt werden müssen, eingesetzt.

Soweit 1 K-Polyurethan-Schäume angesprochen sind, werden diese durch Ausbringen der Prepolymerzusammensetzung aus Druckbehältern, beispielsweise Aerosoldosen, mit Hilfe von Treibmitteln an Ort und Stelle mit einem Raumgewicht von 10 bis 50 g/l ausgebracht und verarbeitet. 1K-Schäume sind feuchtigkeitshärtend, d.h. sie können alleine mit der in der Luft enthaltenen Feuchtigkeit aushärten, wobei freigesetzes CO₂ den Verschäumungsprozeß unterstützt.

Zweikomponenten-Polyurethanschäume benötigen zum Aushärten der Prepolymerzusammensetzung eine zweite, meist Hydroxylgruppen-haltige Komponente, in der Regel ein Polyol, die unmittelbar vor der Schaumbildung zugesetzt werden muß. Die Aushärtung kann durch Katalysatoren beschleunigt werden. Raumgewichte bei 2K-Schäumen liegen typischerweise bei 10 bis 100 g/l. Die zweite Komponente kann Wasser als Vemetzer enthalten. Das aus der Reaktion mit Wasser entstehende CO₂ unterstützt die Schaumbildung.

Übergangsformen zwischen 1K- und 2K-Schäumen, wie oben beschrieben, sind üblich. In diesem Fall wird dem Prepolymer vor dem Ausbringen eine zur Umsetzung der darin noch enthaltenen freien Isocyanatgruppen nicht ausreichende Menge einer Hydroxylkomponente zugesetzt. Für diese Übergangsformen hat sich die Bezeichnung "1,5K-Schäume" eingebürgert. Erfaßt werden auch solche Zusammensetzungen, die mehr als nur eine separate reaktive Komponente aufweisen.

Die vorliegende Erfindung betrifft insbesondere den Bereich der 1K- und 1,5K-Druckdosenschäume, die nach der Freisetzung aus der Aerosoldose mit Hilfe von Treibgas und durch chemische Reaktion gebildetes CO₂ aufschäumen. Die Erfindung kann aber auch im Zusammenhang mit 2K-Schäumen eingesetzt werden.

Wesentliches Kriterium zur Beurteilung der Wirtschaftlichkeit von Prepolymerzusammensetzung zur Erzeugung von Dämmschäumen ist ihre Ergiebigkeit. Im Normallfall kann davon ausgegangen werden, daß eine gute Prepolymerzusammensetzung aus einer 1 I-1K-Druckdose, die zu 75 % gefüllt ist, etwa 451 Schaum ergibt. Weiteres Qualitätsmerkmal ist, daß der Schaum wenig schrumpft und über eine gute Dämmqualität verfügt.

Die Schaumbildung bei 1K-Druckdosenschäumen geht auf eine Reihe von zusammenwirkenden Prozessen zurück, wobei zunächst eine Zellexpansion durch das Verdampfen gelösten Treibmittels erfolgt, die durch thermische Effekte, bedingt durch die Erwärmung, verstärkt wird. Die Reaktion des Prepolymers mit der in der Luft enthaltenen Feuchtigkeit bewirkt die Freisetzung von CO₂, das einen zusätzlichen Treibeffekt ausübt. Durch die Reaktion mit der Feuchtigkeit erfolgt gleichzeitig die Aushärtung des Prepolymers und damit die Stabilisierung des Schaumgerüsts unter dem Expansionsdruck.

Der Schaumausbeute sind bei diesem Konzept naturgemäß Grenzen gesetzt. Die Grenzen werden dabei gebildet durch das Vermögen des Prepolymers, Treibmittel mitzunehmen und freizusetzen und die Menge an freien Isocyanatgruppen, die mit der Luftfeuchtigkeit unter Bildung von CO₂ abreagieren. Dabei ist zu berücksichtigen, daß die in der Regel eher unpolaren Treibgase nicht unbegrenzt in der Prepolymerzusammensetzung löslich sind und daß wegen der Voreinstellung des Schaumes mit Polyolen auf gewünschte Eigenschaften nur eine begrenzte Menge an freien Isocyanatgruppen für die Reaktion mit Wasser und nur ein begrenztes Lösungsvermögen für Treibgas zur Verfügung stehen.

Grundsätzlich wäre es aber wünschenswert, die Schaumausbeute aus einer vorgegebenen Prepolymermengen zu steigern. Dies zum einen aus Kostengründen, zum anderen aber auch aus technischen Gründen. Die Qualität eines thermischen Dämmschaums bemißt sich nach der Menge an eingeschlossener Luft, die die eigentliche Isolierung herbeiführt. Insoweit ist ein größeres Schaumvolumen gleichbedeutend mit einem geringeren spezifischen Schaumgewicht und einem höheren Isoliervermögen.

Es wurde jetzt überraschend gefunden, daß die Schaumausbeute üblicher Prepolymerzusammensetzungen der eingangs bezeichneten Art um bis zu 30 Volumen-% gesteigert werden kann, wenn die Prepolymerzusammensetzung wenigstens 18 Gew.-%, bezogen auf ihr Gewicht, Treibgas enthält und die Treibgaskomponente neben dem in der Prepolymerzusammensetzung gelösten Anteil eine in der Zusammensetzung unter Druck emulgierbare separate Treibmittelphase ausbildet.

Die Erfindung kann mit üblichen Prepolymerzusammensetzungen der eingangs genannten Art verwirklicht werden, die wenigstens 18 Gew.-%, bezogen auf ihr Gewicht, Treibgas enthalten, wobei die Treibgaskomponente nur zum Teil in der gesättigten bzw. in der Regel übersättigten Prepolymerzusammensetzung gelöst vorliegt und zusätzlich eine in der Zusammensetzung emulgierbare Treibmittelphase ausbildet.

Die separate Treibmittelphase in der erfindungsgemäßen Prepolymerzusammensetzung macht zweckmäßigerweise wenigstens 15 Gew.-% der Treibgaskomponente aus und vorzugsweise wenigstens 20 Gew.-%.

Die erfindungsgemäße Prepolymerzusammensetzung bildet in einer herkömmlichen Druck- bzw. Aeosoldose ein Zweiphasensystem aus, von dem die zweite Phase, d. h. der Treibmittelüberschuß über das in der Zusammensetzung gelöste Treibgas, unter dem Systemdruck in der gesättigten ersten Phase emulgiert vorliegt. Das Zweiphasensystem bleibt, wie sich gezeigt hat, unter Druck in der Regel stabil bzw. zumindest halbstabil. Halbstabil heißt, daß die Emulsion durch Schütteln oder andere geeignete Maßnahmen jederzeit aus den beiden Komponenten hergestellt werden kann und dann über längere Zeit bestehen bleibt, bevor sich die Bestandteile wieder trennen.

Emulgatoren, wie sie ohnehin in der Regel in Druckdosenzusammensetzungen als Stabilisatoren enthalten sind, können unterstützend wirken, sind aber erfindungsgemäß nicht unbedingt erforderlich, insbesondere dann, wenn die Prepolymerzusammensetzung selbst und das verwandte Treibmittelgemisch in etwa die gleiche Dichte aufweisen. Von den üblicherweise verwandten Emulgatoren/Stabilisatoren sind die mit hydrophoben Eigenschaften bevorzugt.

Die Treibmittelkomponente macht erfindungsgemäß wenigsten 18 Gew.-%, vorzugsweise wenigsten 20 Gew.-% und insbesondere wenigstens 22 Gew.-% der Prepolymerzusammensetzung aus.

Experimentelle Ergebnisse haben gezeigt, daß die Erhöhung der Menge der Treibgaskomponente eine substantielle Zunahme der Schaumausbeute mit sich bringt. Es wurde gefunden, daß die bloße Steigerung des Treibmittelanteils bei einer herkömmlichen Prepolymerzusammensetzung die Schaumausbeute von standardmäßig 45 auf insgesamt 65 ergab, d. h. um mehr als 40 %. Mit anderen kommerziellen Zusammensetzungen betrug sie wenigstens 20 %. Bei Experimenten in unter Druck stehenden Schaugläsem wurde gefunden, daß es in der Aerosoldose zur Ausbildung einer zweiten Treibgasphase kommt, die emulgiert in der Prepolymerphase vorliegt, sich jedoch nach längerem Stehen abtrennen kann. Gründliches Schütteln stellt die Emulsion auch nach längerer Lagerzeit wieder her. Die Ausbildung einer separaten Lösungsmittelphase und die Emulgierbarkeit dieser Phase ist Voraussetzung für die Erhöhung der Schaumausbeute. Es wurde festgestellt, daß in der Lösungsmittelphase die Kohlenwasserstoffe angereichert sind.

Die Wirkungsweise der zweiten Treibmittelphase kann dahingehend erklärt werden, daß es nach Ausbringen des Schaums mit den darin emulgierten Treibsgaströpfchen zu einer verstärkten Vorexpansion, welche bei der Applikation des Schaumes deutlich wahrnehmbar ist, des Schaums kommt, bevor anschließend die eigentliche normale Schaumbildung über die Zellexpansion (durch Verdampfung des gelösten Treibgasanteils), thermische Effekte (durch die Erwärmung des Treibgases und die dadurch bedingte Ausdehnung) und die Aushärtung des Prepolymers (durch die Vernetzung mit Wasser und Freisetzung von CO₂) einsetzt. Überraschend wurde ferner gefunden, daß durch diese erfindungsgemäß bewirkte Vorexpansion keine Nachteile hinsichtlich der Dimensionsstabilität des erzeugten Schaumes eintreten. Grundsätzlich wäre zu erwarten, daß die Vorexpansion, die ja in einem Stadium stattfindet, in dem der Schaum noch nicht ausgehärtet ist, eher nicht zu einer dauerhaften Volumenexpansion führt.

Die erfindungsgemäß vorzugsweise eingesetzten Treibgase sind eine Kombination aus einem Fluorkohlenwasserstoff einerseits sowie einem Kohlenwasserstoff und/oder Ether andererseits, wobei es sich versteht, daß die Treibgase zumindest überwiegend einen Siedepunkt unter Raumtemperatur haben und unter Druck verflüssigbar sind und allenfalls teilweise niedrigsiedend mit einem Siedepunkt unterhalb 50°C sind. Das Treibgasgemisch sollte in etwa die gleiche Dichte aufweisen, wie die Prepolymerzusammensetzung, d. h. nicht mehr als etwa 10 % nach unten oder oben davon abweichen. In der Regel ist die separate Lösungsmittelphase spezifisch leichter als die Prepolymerzusammensetzung.

Geeignete Fluorkohlenwasserstoffe sind beispielsweise R 134a, R 152a, und R 125; von diesen ist R 134a besonders bevorzugt. Geeignete Kohlenwasserstoffe sind insbesondere Propan, n-Butan, i-Butan, n-Pentan und i-Pentan. Von diesen sind Propan und die Butane unter Druck verflüssigbar. Geeignete Ether sind insbesondere Dimethylether und Diethylether, von denen ersterer unter Druck verflüssigbar ist.

Besonders bevorzugt als Fluorkohlenwasserstoff ist CF₃CH₂F (R 134a), das eine begrenzte Löslichkeit in Polyurethanprepolymeren hat.

Neben den genannten Treibgasen können weitere Treibmittel zugegen sein, etwa CO₂ als Permanentgas.

Besonders bevorzugte Treibgaszusammensetzung ist eine Mischung aus R 134a mit Dimethylether sowie Propan, Butan und/oder Pentan. Der Anteil der Treibgase mit einem Siedepunkt oberhalb Raumtemperatur sollte dabei nicht mehr als 25 Gew.-% der Treibgaskomponenten ausmachen.

Bezüglich der bei Raumtemperatur flüssig vorliegenden Treibgase ist anzumerken, daß die Vernetzung des Prepolymers unter Wärmeentwicklung stattfindet, so daß durch die Temperaturerhöhung und die dadurch verzögerte Verdampfung der höher siedenden Treibgaskomponente eine verstärkte Nachexpansion stattfindet, so daß sich der Expansionsvorgang über den gesamten Zeitraum von der Ausbringung des Prepolymers bis zur endgültigen Aushärtung hinzieht. Auch hierdurch wird dem nachträglichen Schrumpfen des Schaumes entgegengewirkt.

Das Verhältnis Fluorkohlenwasserstoff zu Kohlenwasserstoff/Ether in der Treibgaskomponente beträgt zweckmäßigerweise 40 : 60 bis 80 : 20 nach Gewicht. Besonders bevorzugt ist ein Gewichtsverhältnis Fluorkohlenwasserstoff zu Kohlenwasserstoff/Ether von 60 : 40 bis 75 : 25. Der Fluorkohlenstoff macht wenigstens 13 Gew.-% der Prepolymerzusammensetzung aus.

Wie erwähnt, können herkömmliche Prepolymerzusammensetzungen erfindungsgemäß eingesetzt werden. Diese herkömmlichen Prepolymerzusammensetzung weisen einen Mindestgehalt an reaktiven NCO-Gruppen auf, der im Bereich von 6 bis 18 Gew.-% liegt. Das Prepolymer selbst in ein Polymer geeigneter Viskosität mit endständigen NCO-Gruppen auf Basis eines geeigneten Polyisocyanats. Geeignete Polyisocyanate sind beispielsweise Isophorondiisocyanat, auch als IPDI bezeichnet, Tolylendiisocyanat, auch als TDI bezeichnet, 1,5-Diisocyanatonaphthalin, auch als NDI bezeichnet, Triisocyanatotrimethylmethan, 1,6-Diisocyanatohexan und 4,4-Diisocyanatodiphenylmethan, üblicher als MDI bezeichnet. Alle diese Ausgangsmaterialien können in roher Form, d. h. als Gemisch, wie auch in Form der reinen Isomeren oder als Mischungen der Isomeren eingesetzt werden oder auch in Form ihrer reaktiven Derivate. Als reaktive Derivate kommen vor allem dimere und trimere Formen der Isocyanate wie auch deren Biurete und Allophanate in Frage. Wichtig ist eine Funktionalität von wenigstens 2.

Zur Herstellung der Prepolymere werden solche Polyisocyanate mit hydroxylgruppenhalten Polyethern, Polyestern oder mehrwertigen Alkoholen umgesetzt, wobei darauf geachtet werden muß, daß das dabei entstehenden Prepolymer eine für den Zweck geeignete Viskosität erhält. Die Umsetzung findet in Gegenwart eines Katalysators statt, der die gewünschte Reaktion herbeiführt bzw. beschleunigt. Es handelt sich dabei in der Regel um Katalysatoren auf Aminbasis, auch solche auf Basis von Carboxylaten. Aufgrund eines negativen Einflusses auf die Treibgaslöslichkeit sind die polaren Polyester und mehrwertigen Alkohole zumindest partiell bevorzugt.

Üblicherweise enthalten solche Prepolymerzusammensetzungen zur Erzeugung von Dämmschäumen eine Reihe von Zusätzen, die die Eigenschaften der Prepolymerzusammensetzung wie auch des daraus hergestellten Schaumes beeinflussen sollen. Solche Zusätze sind, neben Katalysatoren für die Vernetzungsreaktion beispielsweise Stabilisatoren, Weichmacher und Flammschutzmittel, wobei insbesondere die Weichmacher und Flammschutzmittel zugleich auch vemetzende Eigenschaften haben können und die Stabilisatoren in der Regel emulgierend wirken. Geeignete Stabilisatoren sind solche auf Silikonbasis, wie sie beispielsweise von der Firma Goldschmidt AG in Essen unter der Bezeichnung "Tegostab"® vertrieben werden. Hydrophobe Silikonstabilisatoren sind bevorzugt, weil sie das Lösungsvermögen des Prepolymers für Treibgas herabzusetzen sie werden üblicherweise in einer Menge von 0.5 bis 3.0 Gew.-%, bezogen auf die gesamte Zusammensetzung, eingesetzt.

Als Polyolkomponente kommen für die erfindungsgemäßen Zusammensetzungen hierfür übliche hydroxylgruppenhaltige Komponenten zum Einsatz, beispielsweise Polyesterpolyole, Polyetherpolyole und natürliche oder modifizierte Pflanzenöle. Besonders bevorzugt ist der Einsatz von Polyesterpolyolen und insbesondere von natürlichen oder modifizierten Pflanzenölen. Als natürliches Pflanzenöl kommt beispielsweise Rizinusöl in Frage, das über mit NCO-Gruppen reaktive Hydroxylgruppen verfügt. Als modifizierte Pflanzenöle, beispielsweise modifiziertes Rizinusöl, kommen insbesondere Umesterungsprodukte in Frage, die über die nötige Anzahl von OH-Gruppen verfügen, insbesondere deren Umesterungsprodukte mit Glyzerin und anderen niedermolekularen Polyolen.

Im allgemeinen haben geeignete Polyole eine OH-Zahl im Bereich von 1 bis 300 und wenigstens zwei OH-Gruppen im Molekül.

Als Katalysatoren für die Herstellung der Prepolymerzusammensetzungen gemäß der Erfindung kommen solche in Frage, die die Umsetzung von Isocyanatgruppen mit Hydroxalgruppen zu katalysieren vermögen. Besonders bevorzugt sind Katalysatoren auf Basis tertiärer Amine, beispielsweise N-Methyl-2-azanorboman, Triethylendiamin, Dimorpholinodiethylether (DMDEE), Trimethylaminoethylpiperazin, Pentamethyldiethylentriamin, Tetramethyliminobispropylamin und Bis(dimethylaminopropyl)-N-isopropanolamin

Die erfindungsgemäßen Preopolymere haben im allgemeinen einen Gehalt an freien NCO-Gruppen von 6 bis 18 Gew.-%, vorzugsweise 10 bis 15 Gew.-%, bezogen auf das Prepolymer selbst. Es ist zweckmäßig die Viskosität des Prepolymers, einschließlich aller Zusätze, jedoch ohne Treibgas, auf eine Anfangs-Gebrauchsviskosität bei 20°C von 5.000 bis 20.00 mPa.s und vorzugsweise 8.000 bis 15.000 mPa.s einzustellen.

Die erfindungsgemäßen Prepolymerzusammensetzungen werden auf übliche Art und Weise hergestellt und in übliche Ortsschaum-Druckdosen abgefüllt. Sie lassen sich als 1K- 1,5K- oder 2K-Systeme ausbringen. 1,5K- und 2K-Systeme erfordern die Gegenwart einer Vernetzerhülse in der Druckdosen, die in der Lage ist, nach Auslösen einen Vemetzer in die Mischung abzugeben, der in einer Menge vorliegt, die ausreicht, mit den vorhandenen Diisocyanatgruppen des Prepolymers teilweise (1,5K) bzw. vollständig (2K) abzureagieren.

Die erfindungsgemäßen Prepolymerzusammensetzungen werden auf für den Fachmann an und für sich bekannte Weise hergestellt, wobei das Prepolymer sowohl in der Druckdose als auch außerhalb erzeugt werden kann. Dem Prepolymer werden dann in der Druckdose die benötigten Zusätze zugesetzt, etwa Stabilisatoren, Zellöffner und Flammschutzmittel, gegebenenfalls auch Tenside und weiteres Polyol zur Feinabstimmung des NCO-Gehalts. Danach wird der Druckbehälter (Aerosoldose) verschlossen und das Treibmittel aufgedrückt.

Die Erfindung wird durch die nachfolgenden Beispiele erläutert:

### Beispiel 1 bis 3:

Prepolymerzusammensetzungen wurden mit der aus der nachstehenden Tabelle ersichtlichen Komponenten in den angegebenen Mengen hergestellt. Als Polyisocyanat wurde Roh-MDI eingesetzt (Desmodur® der Bayer AG in Leverkusen). Als Polyolkomponente wurde ein Polyetherpolyol der OH-Zahl 160 und ein Polyesterpolyol der OH-Zahl 170 eingesetzt. Alle Abmischungen enthielten Stabilisatoren auf Silikonbasis und DMDEE als Katalysator. Als Flammenschutzmittel wurde ein Bromphthalsäureester verwendet.

Alle Abmischungen enthielten ein Treibgasgemisch aus Fluorkohlenstoff, Kohlenwasserstoffen und Dimeythlether.

Die relevanten Daten der Zusammensetzung wie auch die Schaumausbeute ist in der nachstehendenden Tabelle wiedergegeben.

| | Beispiel | Beispiel 2 | Beispiel 3 |
|---|---|---|---|
| Polyetherpolyol | 120 | 412 | 560 |
| Polyesterpolyol | 390 | | |
| Trismonochlorpropylphosphat | 430 | 440 | 395 |
| Bromphthalsäureester | | 108 | |
| Silikonstabilisator | 50 | 30 | 30 |
| DMDEE | 10 | 10 | 15 |
| Gesamt | 1000 | 1000 | 1000 |
| | | | |
| Polyolmischung* | 321 | 286 | 281 |
| Roh. MDI I | | | 332 |
| Roh. MDI II | 330 | 350 | |
| R 134a | 112 | 134 | 149 |
| i-Butan | 30 | | 39 |
| Dimethylether | 32 | 20 | 19 |
| i-Pentan | | 43 | |
| | | | |
| Gesamtgewicht in g | 828 | 833 | 819 |
| Gesamtvolumen in ml | 750 | 750 | 750 |
| Treibgasanteil incl. Pentan in Vol.-% | 26 | 28 | 29 |
| Treibgasanteil incl. Pentan in Gew.-% | 21 | 23 | 25 |
| NCO-Überschuß in % | 12.99 | 13.90 | 14.04 |
| Füllgrad der Dose in Vol.-% | 75 % | 75 % | 75 % |
| Schaumausbeute | 59 I | 61I | 65 I |

| | | | |
|---|---|---|---|
| *) wie oben | | | |

## Patentansprüche

1. Prepolymerzusammensetzung, insbesondere zur Erzeugung von Isolierschäumen, auf Basis eines Polyisocyanats mit einer Funktionalität von wenigsten 2 und eines Polyols mit wenigstens 2 OH-Gruppen im Molekül, wobei das Prepolymer einen Isocyanatgehalt von 6 bis 18 Gew.-%, bezogen auf das Prepolymer, aufweist und die Zusammensetzung übliche Zusatzstoffe sowie eine unter Druck flussige Treibgaskomponente enthält, **dadurch gekennzeichnet, daß** die Prepolymerzusammensetzung wenigstens 18 Gew.-%, bezogen auf ihr Gewicht, Treibgas enthält, wobei die Treibgaskomponente so bemessen ist, daß neben in der Prepolymerzusammensetzung gelöstem Treibgas eine in der Prepolymerzusammensetzung emulgierte Treibmittelphase vorhanden ist.

2. Prepolymerzusammensetzung nach Anspruch 1, **dadurch gekennzeichnet, daß** sie wenigstens 20 Gew.-%, bezogen auf die gesamte Prepolymerzusammensetzung, Treibgas enthält.

3. Prepolymerzusammensetzung nach Anspruch 2, **dadurch gekennzeichnet, daß** sie wenigstens 22 Gew.-%, bezogen auf die Prepolymerzusammensetzung, Treibgas enthält.

4. Prepolymerzusammensetzung nach einem der vorstehenden Ansprüche, **dadurch gekennzeichnet, daß** die Treibgaskomponente einen Fluorkohlenwasserstoff zusammen mit einem Kohlenwasserstoff und/oder dem niedrigsiedenden Ether enthält.

5. Prepolymerzusammensetzung nach Anspruch 4, **dadurch gekennzeichnet, daß** die Treibmittelphase etwa die gleiche Dichte hat wie die Prepolymerzusammensetzung.

6. Prepolymerzusammensetzung nach Anspruch 4 oder 5, **dadurch gekennzeichnet, daß** der Fluorkohlenwasserstoff CF₃CH₂F (R 134) a ist.

7. Prepolymerzusammensetzung nach Anspruch 6, **dadurch gekennzeichnet, daß** die Treibgaskomponente Propan, i-Butan, n-Butan und/oder Dimethylether enthält.

8. Prepolymerzusammensetzung nach einem der Ansprüche 4 bis 7, **dadurch gekennzeichnet, daß** die Treibgaskomponente zusätzlich i-Pentan und/oder n-Pentan enthält.

9. Prepolymerzusammensetzung nach einem der Ansprüche 4 bis 8, **dadurch gekennzeichnet, daß** das Gewichtsverhältnis Fluorkohlenwasserstoff zu Kohlenwasserstoff und/oder Ether im Bereich 40 : 60 bis 80 : 20 liegt.

10. Prepolymerzusammensetzung nach Anspruch 9, **dadurch gekennzeichnet, daß** das Gewichtsverhältnis im Bereich von 60: 40 bis 75 : 25 liegt.

11. Prepolymerzusammensetzung nach einem der vorstehenden Ansprüche, **dadurch gekennzeichnet, daß** wenigstens 15 Gew.-% der Treibgaskomponente als separate Phase vorliegen.

12. Prepolymerzusammensetzung nach einem der Ansprüche 4 bis 11, **dadurch gekennzeichnet, daß** sie den Fluorkohlenwasserstoff in einer Menge von wenigstens 13 Gew.-% enthält, bezogen auf die gesamte Zusammensetzung.

13. Prepolymerzusammensetzung nach einem der vorstehenden Ansprüche, **dadurch gekennzeichnet, daß** sie neben dem Prepolymer Weichmacher, Flammschutzmittel, Stabilisatoren, Zellöffner, Zellregulierungsmittel, Katalisatoren, Kohlelösemittel und/oder Emulgatoren enthält.

14. Prepolymerzusammensetzung nach einem der vorstehenden Ansprüche, **dadurch gekennzeichnet, daß** sie einen hydrophoben Silikonstabilisator in einer Menge von 0,5 bis 3,0 Gew.-%, bezogen auf die gesamte Zusammensetzung, enthält.

15. Prepolymerzusammensetzung nach einem der vorstehenden Ansprüche, enthalten in einer Druckdose.

## Claims

1. A prepolymer composition, in particular for producing insulating foams, based on a polyisocyanate with a functionality of at least 2 and a polyol with at least two OH groups in the molecule, the prepolymer having an isocyanate content of 6 to 18 wt% based on the prepolymer, and the composition containing usual additives and a propellant gas component which is liquid under pressure, **characterized in that** the prepolymer composition contains at least 18 wt% of propellant gas based on the weight of the composition, the propellant gas component being dimensioned such that a propellant phase emulsified in the prepolymer composition is present alongside propellant gas dissolved in the prepolymer composition.

2. A prepolymer composition according to claim 1, **characterized in that** it contains at least 20 wt% of propellant gas based on the total prepolymer composition.

3. A prepolymer composition according to claim 2, **characterized in that** it contains at least 22 wt% of propellant gas based on the prepolymer composition.

4. A prepolymer composition according to any of the above claims, **characterized in that** the propellant gas component contains a fluorocarbon together with a hydrocarbon and/or the low-boiling ether.

5. A prepolymer composition according to claim 4, **characterized in that** the propellant phase has roughly the same density as the prepolymer composition.

6. A prepolymer composition according to claim 4 or 5, **characterized in that** the fluorocarbon is CF₃CH₂F (R 134a).

7. A prepolymer composition according to claim 6, **characterized in that** the propellant gas component contains propane, isobutane, n-butane and/or dimethyl ether.

8. A prepolymer composition according to any of claims 4 to 7, **characterized in that** the propellant gas component additionally contains isopentane and/or n-pentane.

9. A prepolymer composition according to any of claims 4 to 8, **characterized in that** the weight ratio of fluorocarbon to hydrocarbon and/or ether is in the range of 40 : 60 to 80 : 20.

10. A prepolymer composition according to claim 9, **characterized in that** the weight ratio is in the range of 60 : 40 to 75 : 25.

11. A prepolymer composition according to any of the above claims, **characterized in that** at least 15 wt% of the propellant gas component is present as a separate phase.

12. A prepolymer composition according to any of claims 4 to 11, **characterized in that** it contains the fluorocarbon in a quantity of at least 13 wt% based on the total composition.

13. A prepolymer composition according to any of the above claims, **characterized in that** it contains alongside the prepolymer plasticizers, flameproofing agents, stabilizers, cell openers, cell regulators, catalysts, carbon solvents and/or emulsifiers.

14. A prepolymer composition according to any of the above claims, **characterized in that** it contains a hydrophobic silicone stabilizer in a quantity of 0.5 to 3.0 wt% based on the total composition.

15. A prepolymer composition according to any of the above claims, contained in a pressure can.

## Revendications

1. Composition de prépolymère, en particulier pour la préparation de mousses isolantes, à base d'un polyisocyanate ayant une fonctionnalité d'au moins 2 et d'un polyol ayant au moins 2 groupes OH dans la molécule, tandis que le prépolymère présente une teneur en isocyanate de 6 à 18 % en poids, par rapport au prépolymère, et que la composition contient des additifs classiques, ainsi qu'un composant gaz propulseur liquide sous pression, **caractérisée en ce que** la composition de prépolymère contient au moins 18 % en poids , par rapport à son poids, de gaz propulseur, tandis que le composant gaz propulseur est en une quantité telle que, outre le gaz propulseur dissous dans la composition de prépolymère, une phase d'agent propulseur émulsifiée dans la composition de prépolymère est présente.

2. Composition de prépolymère selon la revendication 1, **caractérisée en ce qu'**elle contient au moins 20 % en poids, par rapport à l'ensemble de la composition de prépolymère, de gaz propulseur.

3. Composition de prépolymère selon la revendication 2, **caractérisée en ce qu'**elle contient au moins 22 % en poids, par rapport à la composition de prépolymère, de gaz propulseur.

4. Composition de prépolymère selon l'une des revendications précédentes, **caractérisée en ce que** le composant gaz propulseur contient un hydrocarbure fluoré conjointement avec un hydrocarbure et/ou avec l'éther à bas point de fusion.

5. Composition de prépolymère selon la revendication 4, **caractérisée en ce que** la phase d'agent propulseur a approximativement la même densité que la composition de prépolymère.

6. Composition de prépolymère selon la revendication 4 ou 5, **caractérisée en ce que** l'hydrocarbure fluoré est CF₃CH₂F (R 134a).

7. Composition de prépolymère selon la revendication 6, **caractérisée en ce que** le composant gaz propulseur contient du propane, de l'isobutane, du n-butane et/ou de l'éther diméthylique.

8. Composition de prépolymère selon l'une des revendications 4 à 7, **caractérisée en ce que** le composant gaz propulseur contient en outre de l'isopentane et/ou du n-pentane.

9. Composition de prépolymère selon l'une des revendications 4 à 8, **caractérisée en ce que** le rapport en poids de l'hydrocarbure fluoré à l'hydrocarbure et/ou l'éther se situe dans l'intervalle de 40:60 à 80:20.

10. Composition de prépolymère selon la revendication 9, **caractérisée en ce que** le rapport en poids se situe dans l'intervalle de 60:40 à 75:25.

11. Composition de prépolymère selon l'une des revendications précédentes, **caractérisée en ce qu'**au moins 15 % en poids du composant gaz propulseur sont présents sous forme de phase séparée.

12. Composition de prépolymère selon l'une des revendications 4 à 11, **caractérisée en ce qu'**elle contient l'hydrocarbure fluoré en une quantité d'au moins 13 % en poids, par rapport à l'ensemble de la composition.

13. Composition de prépolymère selon l'une des revendications précédentes, **caractérisée en ce que**, outre le prépolymère, elle contient des plastifiants, des agents d'ignifugation, des stabilisants, des agents porogènes, des agents de régulation des pores, des catalyseurs, des solvants carbonés et/ou des émulsifiants.

14. Composition de prépolymère selon l'une des revendications précédentes, **caractérisée en ce qu'**elle contient un stabilisant siliconé hydrophobe en une quantité de 0,5 à 3,0 % en poids, par rapport à l'ensemble de la composition.

15. Composition de prépolymère selon l'une des revendications précédentes, contenue dans une cartouche sous pression.
